(19)

Europäisches
Patentamt
European
Patent Office
Office européen
des brevets

(11) **EP 4 502 763 A1**

(12) **EUROPEAN PATENT APPLICATION**
published in accordance with Art. 153(4) EPC

(43) Date of publication:
**05.02.2025 Bulletin 2025/06**

(21) Application number: **22934636.6**

(22) Date of filing: **11.08.2022**

(51) International Patent Classification (IPC):
**G06F 3/01** (2006.01)   **G06T 19/00** (2011.01)

(86) International application number:
**PCT/CN2022/111741**

(87) International publication number:
**WO 2023/184816 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2022 CN 202210329680**

(71) Applicant: **Chimeta Limited
Shanghai 200120 (CN)**

(72) Inventors:
• **PAN, Jong-guang
Shanghai 200122 (CN)**
• **WAN, Jingchuan
Shanghai 200122 (CN)**

(74) Representative: **Renaudo, Adrien Hanouar
Patendibüroo Käosaar OÜ
Tähe 94
50107 Tartu (EE)**

(54) **CLOUD DESKTOP DISPLAY METHOD AND APPARATUS, DEVICE AND STORAGE MEDIUM**

(57)    Provided in the embodiments of the present disclosure are a method and an apparatus for displaying a cloud desktop, a device and a storage medium. In the method for displaying a cloud desktop, a real scene image in a real environment where a wearable apparatus is located and a cloud desktop image provided by a cloud server are acquired, and the real scene image is displayed synchronously with the cloud desktop image in a virtual scene of the wearable apparatus. In this way, the real scene image is displayed synchronously with the cloud desktop image in a virtual scene of the wearable apparatus, so that a user can still perceive a real scene of the real world after wearing the wearable apparatus, and the user does not need to take off the wearable apparatus when would like to use a tool in the real world, a sense of immersion of the user in the virtual world is improved accordingly.

acquiring a real scene image in a real environment where a wearable apparatus is located and a cloud desktop image by a cloud server — 11

in a virtual scene of the wearable apparatus, displaying the real scene image synchronously with the cloud desktop image — 12

FIG. 1

EP 4 502 763 A1

**Description**

**CROSS-REFERENCE TO RELATED APPLICATIONS**

The present disclosure refers to Chinese Patent Application No. 202210329680.6, filed on March 31, 2022, and entitled "method and apparatus for displaying cloud desktop, device and storage medium", which is hereby incorporated by reference in its entirety.

**TECHNICAL FIELD**

The present disclosure relates to the field of intelligent wearable technology, and in particular to a method and an apparatus for displaying a cloud desktop, a device and a storage medium.

**BACKGROUND**

With the rapid development of related technologies such as virtual reality, augmented reality and mixed reality, head-mounted smart devices are constantly being innovated and the user experience is gradually improving, such as head-mounted virtual reality glasses, head-mounted mixed reality glasses and other smart glasses.

In the prior art, smart glasses can be used to display a cloud desktop video sent by a cloud server, and interact with the cloud desktop through a handle or other controllers that match the smart glasses, so that a user can perform remote office or leisure activities through the cloud desktop in the virtual world.

However, in this way, since users cannot perceive the actual scenes in the real world after wearing smart glasses, they need to take off the smart glasses when they want to use tools in the real world, which reduces the user's immersion in the virtual world. Therefore, a solution needs to be proposed urgently.

**SUMMARY**

The embodiments of the present disclosure provide a method and an apparatus for displaying a cloud desktop, a device and a storage medium, so that a user can still perceive a real scene of the real world after wearing a wearable apparatus, a sense of immersion of the user in the virtual world is improved accordingly.

The embodiments of the present disclosure provide a method for displaying a cloud desktop, including: acquiring a real scene image in a real environment where a wearable apparatus is located and a cloud desktop image provided by a cloud server; and in a virtual scene of the wearable apparatus, displaying the real scene image synchronously with the cloud desktop image.

Further optionally, the acquiring a real scene image in a real environment where a wearable apparatus is located and a cloud desktop image provided by a cloud server, includes: for any frame of cloud desktop image in a cloud desktop video stream, acquiring a timestamp of the cloud desktop image; and selecting a frame of image having a timestamp same with the cloud desktop image from a real scene video stream captured of the real environment where the wearable apparatus is located, as the real scene image.

Further optionally, the in a virtual scene of the wearable apparatus, displaying the real scene image synchronously with the cloud desktop image, includes: fusing the cloud desktop image and the real scene image, to obtain a fused image; and displaying the fused image in the virtual scene of the wearable apparatus.

Further optionally, the fusing the cloud desktop image and the real scene image, to obtain a fused image, includes: superimposing the real scene image on the cloud desktop image, to obtain the fused image.

Further optionally, the fusing the cloud desktop image and the real scene image, to obtain a fused image, includes: splicing the real scene image and the cloud desktop image, to obtain the fused image.

Further optionally, the real scene image includes: a left-view real scene image and a right-view real scene image captured by a binocular camera; the fusing the cloud desktop image and the real scene image, to obtain a fused image, includes: performing binocular rendering on the cloud desktop image, to obtain a left-view virtual image and a right-view virtual image; fusing the left-view real scene image with the left-view virtual image, to obtain a left-view fused image; and fusing the right-view real scene image with the right-view virtual image, to obtain a right-view fused image. Further optionally, the wearable apparatus further includes: a sight line detection component; and the method further includes: performing a sight line detection of a user by the sight line detection component, to obtain a sight line direction; determining a gaze area of the user in the virtual scene according to the sight line direction; if the gaze area is located in an area where the real scene image is located, highlighting the real scene image.

The embodiments of the present disclosure further provide an apparatus for displaying a cloud desktop, including: an acquiring module, configured to: acquire a real scene image in a real environment where a wearable apparatus is located and a cloud desktop image provided by a cloud server; and a displaying module, configured to: in a virtual scene of the wearable apparatus, display the real scene image synchronously with the cloud desktop image.

The embodiments of the present disclosure further provide a terminal device, including: a memory and a processor; where, the memory is used to: store one or more computer instructions; and the processor is used to execute the one or more computer instructions to: perform the steps in the method for displaying the cloud desktop.

The embodiments of the present disclosure further provide a computer-readable storage medium storing a computer program, when the computer program is executed by a processor, the processor is caused to implement the steps in the method for displaying the cloud desktop.

Provided in the embodiments of the present disclosure are a method and an apparatus for displaying a cloud desktop, a device and a storage medium. In the method for displaying a cloud desktop, a real scene image in a real environment where a wearable apparatus is located and a cloud desktop image provided by a cloud server are acquired, and the real scene image is displayed synchronously with the cloud desktop image in a virtual scene of the wearable apparatus. In this way, the real scene image is displayed synchronously with the cloud desktop image in a virtual scene of the wearable apparatus, so that a user can still perceive a real scene of the real world after wearing the wearable apparatus, and the user does not need to take off the wearable apparatus when would like to use a tool in the real world, a sense of immersion of the user in the virtual world is improved accordingly.

**BRIEF DESCRIPTION OF THE DRAWINGS**

In order to describe the technical solutions in the embodiments of the present disclosure or the prior art more clearly, the drawings required to be used for descriptions about the embodiments or the prior art will be simply introduced below. It is apparent that the drawings described below are some embodiments of the present disclosure. Those of ordinary skill in the art may further obtain other drawings according to these drawings without creative work.

FIG. 1 is a schematic diagram of a flow chart of a method for displaying a cloud desktop according to an exemplary embodiment of the present disclosure;
FIG. 2 is a schematic diagram of superimposing provided by an exemplary embodiment of the present disclosure;
FIG. 3 is a schematic diagram of splicing provided by an exemplary embodiment of the present disclosure;
FIG. 4 is a schematic diagram of binocular rendering provided by an exemplary embodiment of the present disclosure;
FIG. 5 is a schematic diagram of a correction of binocular rendering provided by an exemplary embodiment of the present disclosure;
FIG. 6 is an architecture diagram of a mobile terminal provided by an exemplary embodiment of the present disclosure;
FIG. 7 is a schematic diagram of a display terminal provided by an exemplary embodiment of the present disclosure;
FIG. 8 is a schematic diagram of an apparatus for displaying a cloud desktop provided by an exemplary embodiment of the present disclosure; and
FIG. 9 is a schematic diagram of a terminal device provided by an exemplary embodiment of the present disclosure.

**DETAILED DESCRIPTION OF EXAMPLE EMBODIMENTS**

For making the purposes, technical solutions and advantages of the embodiments of the present disclosure clearer, the technical solutions in the embodiments of the present disclosure will be clearly and completely described below in combination with the drawings in the embodiments of the present disclosure. It is apparent that the described embodiments are not all embodiments but part of embodiments of the present disclosure. All other embodiments obtained by those of ordinary skill in the art on the basis of the embodiments in the present disclosure without creative work shall fall within the scope of protection of the present disclosure.

In the prior art, smart glasses can be used to display a cloud desktop video sent by a cloud server, and interact with the cloud desktop through a handle or other controllers that match the smart glasses, so that a user can perform remote office or leisure activities through the cloud desktop in the virtual world. However, in this way, since the user cannot perceive the actual scene in the real world after wearing smart glasses, the user needs to take off the smart glasses when want to use a tool in the real world, which reduces a sense of immersion of the user in the virtual world.

In view of the above technical problems, a solution is provided in some embodiments of the present disclosure. The technical solutions provided by the embodiments of the present disclosure will be described in detail below with reference to the accompanying drawings.

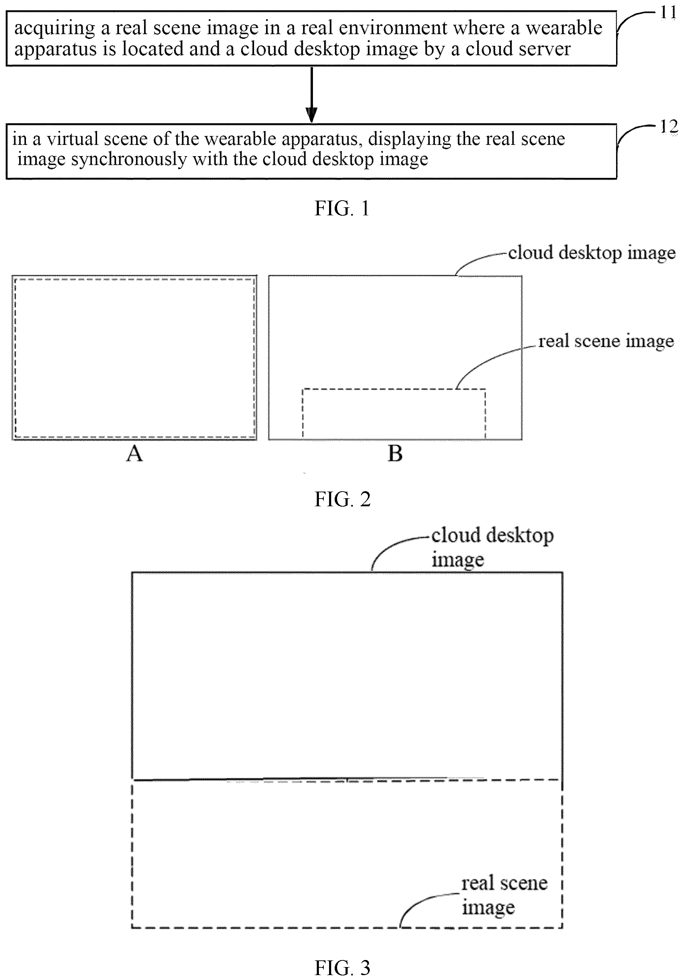

FIG. 1 is a schematic diagram of a flow chart of a method for displaying a cloud desktop according to an exemplary embodiment of the present disclosure. As shown in FIG. 1, the method includes:

Step 11: acquiring a real scene image in a real environment where a wearable apparatus is located and a cloud desktop image provided by a cloud server.
Step 12: in a virtual scene of the wearable apparatus, displaying the real scene image synchronously with the cloud desktop image.

This embodiment can be executed by a terminal device, a wearable apparatus, or a cloud server. The terminal device may include a computer, a tablet computer or a mobile phone, etc. The wearable apparatus may include: VR (Virtual Reality) glasses, MR (Mixed Reality) glasses or a VR head-mounted display device (Head-Mounted Display, HMD), etc.

The real environment refers to the environment in the real world, and the real scene image is used to reflect the real environment in which the wearable apparatus is located. In this embodiment, the real environment where the wearable apparatus is located can be photographed by a camera installed in the real environment to obtain a real scene video stream. The real scene image is any frame of image in the real scene video stream. The camera used to shoot the real environment can be installed on the wearable apparatus, and the installation position of which should ensure that the field of view of the camera is within the field of view of the human eye, so that when the human eye's line of sight is blocked by the wearable apparatus, the camera can observe the real scene instead of the human eye.

The cloud desktop, also known as desktop virtualization and cloud computer, can use virtual technology to virtualize various physical devices, thereby effectively improving resource utilization, the cost is saved and the application quality is improved accordingly. After deploying the virtual desktop on the cloud platform in the cloud server, the user can access the virtual desktop and application from anywhere. The cloud server can send the cloud desktop video stream to the wearable apparatus for display. The cloud desktop image refers to any frame of image in the cloud desktop video stream.

After the real scene image and the cloud desktop image are acquired, the real scene image can be displayed synchronously with the cloud desktop image in the virtual scene of the wearable apparatus.

When this embodiment is executed by a terminal device, taking a tablet computer as an example, the tablet computer can obtain the real scene image sent by the wearable apparatus and the cloud desktop image sent by the cloud server, and send the real scene image and the cloud desktop image to the wearable apparatus for synchronous display.

When this embodiment is executed by a wearable apparatus, taking VR glasses as an example, the VR glasses can capture a real scene image, obtain a cloud desktop image sent by the cloud server, and synchronously display the real scene image and the cloud desktop image; alternatively, the terminal device can receive the cloud desktop image sent by the cloud server and forward it to the VR glasses; the VR glasses can obtain the cloud desktop image sent by the terminal device, capture real scene image, and synchronously display the real scene image and the cloud desktop image.

When this embodiment is executed by a cloud server, the cloud server can obtain the real scene image sent by the wearable apparatus, and send the real scene image and the cloud desktop image to the wearable apparatus for synchronous display.

The synchronous display of the real scene image with the cloud desktop image refers to displaying the real scene image while displaying the cloud desktop image in the virtual scene of the wearable apparatus at the same time. That is, the user can view virtual cloud desktop image in virtual scene, and can also view the real scene image.

Through this implementation, the real scene image can be displayed synchronously with the cloud desktop image in the virtual scene, so that the user can still perceive the real scene of the real world after wearing the wearable apparatus, and the user does not need to take off the wearable apparatus when would like to use a tool in the real world, a sense of immersion of the user in the virtual world is improved accordingly.

At the same time, when the camera used to collect the real scene image is installed on the wearable apparatus, there is no need to set up an external handle or other controller that matches the wearable apparatus to interact with the cloud desktop. On the one hand, the hardware cost is reduced, and on the other hand, it is conducive to making the wearable apparatus more integrated and lightweight.

In the following embodiments, a wearable apparatus is used as an execution subject for illustrative description.

In some optional embodiments, the wearable apparatus can obtain the cloud desktop video stream sent by the cloud server and the real scene video stream of the display scene in real time, and can synchronously display the cloud desktop image in the cloud desktop video stream and the real scene image in the real scene video stream frame by frame. An exemplary description will be given below.

For any frame of cloud desktop image in the acquired cloud desktop video stream, the wearable apparatus can obtain the timestamp of the cloud desktop image. For example, the timestamp of the cloud desktop image P1 is 20:59:01. Furthermore, the wearable apparatus can select a frame of image having a same timestamp same with the cloud desktop image from the real scene video stream captured of the real environment where the wearable apparatus is located, as the real scene image. For example, the wearable apparatus may select an image P1' with a timestamp of 20:59:01 from the real scene video stream as the real scene image. Thus, the wearable apparatus can synchronously display different images with the same timestamp. In some possible practical application scenarios, some specific applications can be run on the cloud desktop. Since the acquired cloud desktop image and the real scene image have the same timestamp, the user can interact with the application in real time by interacting with specific objects in the real scene image. For example, the user can touch a charger in the real scene image to synchronously execute corresponding operations in the application (closing the application, opening the application, or restarting the application, etc.). When the running application is a game, the user can click on a teacup or toothbrush in the real scene image to cause the virtual character in the game to synchronously perform corresponding operations (drink water or brush teeth, etc.).

Through this implementation, the timestamps of the acquired cloud desktop image and real scene image can be made the same, thereby improving the synchronization effect of the cloud desktop image and the real scene image and reducing the sense of disconnection when the cloud desktop image and the real scene image are displayed synchronously.

Optionally, the operation of step 12 of the aforementioned embodiment, "in a virtual scene of the wearable apparatus, displaying the real scene image synchronously with the cloud desktop image", can be implemented based on the following steps:

Step 121: fusing the cloud desktop image and the real scene image, to obtain a fused image.
Step 122: displaying the fused image in the virtual scene of the wearable apparatus.

In this way, the user can simultaneously observe relevant information of the cloud desktop and relevant information of the real world from the fused image. The user does not need to take off the wearable apparatus when would like to use a tool in the real world. As a result, the user can interact with the object in the real world more conveniently when using wearable apparatus.

Optionally, the wearable apparatus may fuse the cloud desktop image and the real scene image based on the following implementations:

Implementation 1: superimposing the real scene image on the cloud desktop image to obtain a fused image.
Implementation 2: splicing the real scene image with the cloud desktop image to obtain a fused image.

In implementation 1, as shown in part A of FIG. 2, the entire real scene image and the entire cloud desktop image may be superimposed. As shown in part B of FIG. 2, part of the real scene image may be cut out from the real scene image and superimposed on a designated area of the cloud desktop image. Alternatively, instead of cutting the real scene image, the real scene image may be zoomed out and superimposed on a part of the cloud desktop image. Optionally, the user can zoom in, zoom out or cut the real scene image through a physical button on the wearable apparatus or a virtual button in the virtual scene, and can adjust the area where the real scene image is superimposed on the cloud desktop image.

In implementation 2, as shown in FIG. 3, the real scene image and the cloud desktop image may be spliced. Optionally, the user can zoom in, zoom out or cut the real scene image through a physical button on the wearable apparatus or a virtual button in the virtual scene, and can adjust the position of the real scene image and the cloud desktop image.

It should be noted that the user can switch between the above-mentioned superimposing and splicing implementations through the physical button on the wearable apparatus or the virtual button in the virtual scene.

Through the above implementation, the cloud desktop image and the real scene image are fused by superimposing or splicing, and the user can freely adjust the fusion method of the cloud desktop image and the real scene image, and can observe the cloud desktop image and the real scene image more completely at the same time.

Optionally, in actual scenarios, a wearable apparatus may be generally equipped with two cameras, i.e., one left camera and one right camera, referred to as a binocular camera. The wearable apparatus can capture the real scene image based on the binocular camera. The real scene image may include: a left-view real scene image and a right-view real scene image captured by the binocular camera. The left-view real scene image is the real scene image captured by the left camera in the binocular camera, and the left-view real scene image corresponds to the user's left eye; the right-view real scene image is the real scene image captured by the right camera in the binocular camera, and the right-view real scene image corresponds to the user's right eye.

Based on this, the wearable apparatus fuses the cloud desktop image and the real scene image to obtain a fused image, which can be achieved based on the following steps:

Step S1: performing binocular rendering on the cloud desktop image, to obtain a left-view virtual image and a right-view virtual image. The left-view virtual image refers to the virtual image corresponding to the user's left eye, and the right-view virtual image refers to the virtual image corresponding to the user's right eye.
Step S2: fusing the left-view real scene image with the left-view virtual image, to obtain a left-view fused image; and fusing the right-view real scene image with the right-view virtual image, to obtain a right-view fused image. Based on this step, when the left eye and the right eye of the user see the left-view fusion image and the right-view fusion image respectively, the user's brain can automatically synthesize the images seen by the left and right eyes into a 3D image.

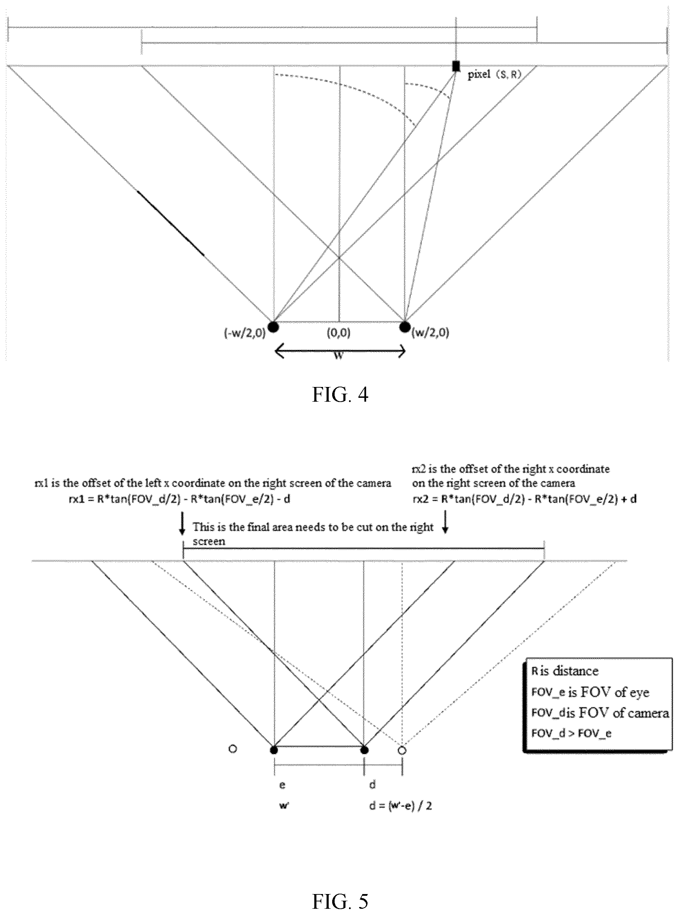

The following will describe the binocular rendering in step S1 in detail with reference to FIG. 4.

As shown in FIG. 4, R is a display distance required by the glasses, FOV (Field of View), and w is a distance between the user's two eyes.

D is a pixel width output to the left and right screens, that is, the maximum width of the image that the user can see with one eye, which can be calculated based on the following formula 1:

$$D = 2 * R * \tan\left(\frac{FOV}{2}\right) \quad (Formula\ 1)$$

Let the distance from one pixel point in the cloud desktop image to a central axis be S, then the coordinate of said point is (S, R).

Based on the above process, the ratio of the x-coordinate value of this pixel point in the left-view virtual image (represented by B1) and the ratio of the x-coordinate value of this pixel point in the right-view virtual image (represented by B2) can be calculated by the following formulas 2 and 3 respectively.

$$B1 = \left(S + \frac{w}{2} + \frac{D}{2}\right)/D \quad (Formula\ 2)$$

$$B2 = \left(S - \frac{w}{2} + \frac{D}{2}\right)/D \quad (Formula\ 3)$$

After calculating the ratio of the x-coordinate value of this pixel point in the left-view virtual image and the right-view virtual image, multiply it by the actual pixel width a of the screen to obtain the final x-coordinate value, and the y-coordinate value remains unchanged.

Through this binocular rendering method, a left-view virtual image and a right-view virtual image corresponding to the user's left eye and right eye respectively can be obtained, so that the user can use the wearable apparatus to view the cloud desktop more realistically, thereby enhancing the user's sense of immersion in the process of interacting with the cloud desktop.

After binocular rendering of the cloud desktop image, image fusion can be further performed. However, as shown in FIG. 5, in the above binocular rendering process, since the distance between the binocular cameras is usually different from the distance between the user's two eyes, the binocular rendering can be further corrected according to the following formula.

As shown in FIG. 5, d is the deviation distance between the camera and the eye, which can be calculated based on the following formula:

$$d = (w' - e)/2 \quad (Formula\ 4)$$

Where e is the distance between two eyes, and w' is the distance between the cameras. Based on this, the offset rx1 of the left x-coordinate in the right screen of the camera and the offset rx2 of the right x-coordinate in the right screen of the camera can be calculated by the following formula 5 and formula 6:

$$rx1 = R * \tan\left(\frac{FOV_d}{2}\right) - R * \tan\left(\frac{FOV_e}{2}\right) - d \quad (Formula\ 5)$$

$$rx2 = R * \tan\left(\frac{FOV_d}{2}\right) - R * \tan\left(\frac{FOV_e}{2}\right) + d \quad (Formula\ 6)$$

Where, $FOV_d$ is the field of view of the camera, $FOV_e$ is the field of view of the eye, and R is the display distance required by the glasses.

By calculating the above offset, the left-view virtual image and the right-view virtual image obtained after binocular rendering are further corrected. Based on the more accurate virtual image, the picture quality of the fused image obtained by subsequent fusion can be improved.

In some embodiments, the wearable apparatus may be equipped with a sight line detection component. The wearable apparatus can perform sight line detection with regard to the user through the sight line detection component, to obtain a sight line direction of the user. Furthermore, the wearable apparatus can determine a gaze area of the user in the virtual scene according to the sight line direction.

If the gaze area is located in an area where the real scene image is located, the real scene image is highlighted; and if the gaze area is located in an area where the cloud desktop image is located, the cloud desktop image is highlighted.

It should be noted that if the user stares at the cloud desktop image for a long time, the real scene image can be hidden and the cloud desktop image can be displayed in full screen; if the user stares at the real scene image for a long time, the cloud desktop image can be hidden and the real scene image can be displayed in full screen. Optionally, one virtual button/area may be preset in the virtual scene of the wearable apparatus. When the user gazes the button/area, the corresponding function may be executed, such as displaying the cloud desktop image in full screen or displaying the real scene image in full screen, or displaying the cloud desktop image and the real scene image in a preset layout style, etc.

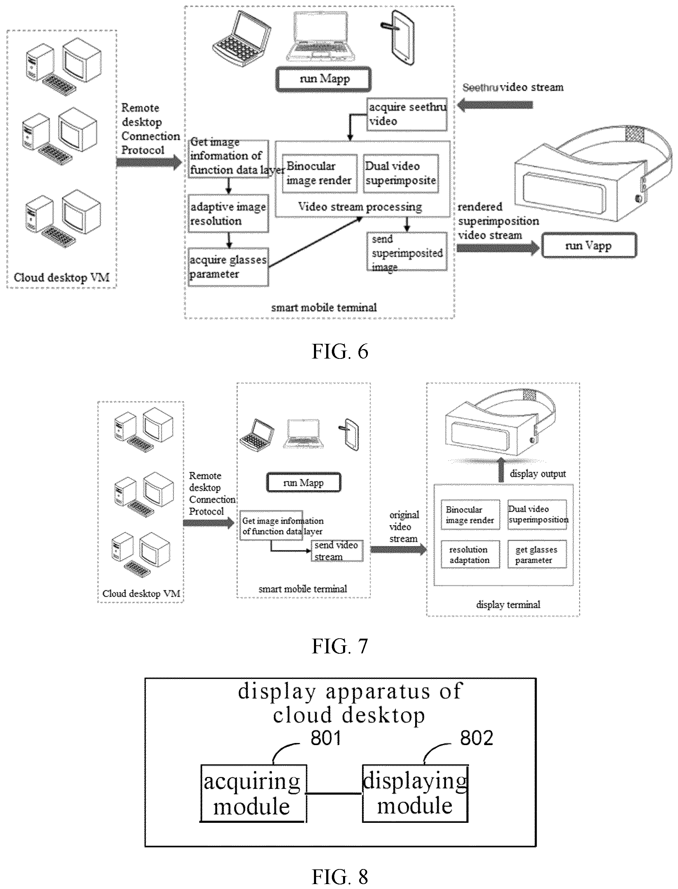

The following will further illustrate the cloud desktop display method in combination with FIGs. 6 and 7 and actual application scenarios.

FIG. 6 is an architectural diagram of a video stream processing method of a mobile terminal (i.e., the aforementioned terminal device), and FIG. 7 is an architectural diagram of a video stream processing method of a display terminal (i.e., the aforementioned wearable apparatus).

In an actual scenario, a specific application (hereinafter referred to as Mapp) may be installed on the mobile terminal, and the application may obtain authorized account information. After the user enters the account password, the application can call the cloud desktop API (Application Programming Interface) for authorization and authentication. When the account password entered by the user is authenticated, Mapp can obtain the IP (Internet Protocol, a protocol for interconnecting networks) address and port number of the cloud desktop virtual machine corresponding to the user account.

Mapp can try to establish a connection with the cloud desktop virtual machine based on the remote desktop connection protocol through wireless transmission. It should be noted that the remote desktop connection protocol includes but is not limited to: TCP/IP (Transmission Control Protocol/Internet Protocol) protocol, NetBEUI (NetBios Enhanced User Interface) protocol, IPX/SPX (Internetwork Packet Exchange/Sequences Packet Exchange) protocol or RDP (Remote Display Protocal) protocol, etc., and this embodiment does not impose any limitation. The RDP protocol is a remote desktop protocol based on the TCP/IP protocol.

After Mapp successfully establishes a connection with the cloud desktop virtual machine, data communication based on the ISO layer remote desktop connection protocol can begin between the two. When the display terminal is not connected to Mapp, Mapp runs and is used as a normal cloud desktop client. When it is detected that the display terminal is connected to Mapp, Mapp no longer directly displays the cloud desktop interface, but processes the cloud desktop video stream returned by the cloud desktop virtual machine and sends it to the display terminal for display.

After all aforementioned connections based on the remote desktop connection protocol are successfully completed, the Mapp program can identify the image channel from the established virtual channel. The image channel has a special identifier. Mapp can obtain the image data sent by the image channel, to obtain the original bitmap stream data of the cloud desktop.

Furthermore, Mapp can obtain the resolution of the bitmap, and compress and optimize the obtained original bitmap stream data according to parameters such as the resolution and the frame rate parameter of the display terminal to improve the efficiency of subsequent image processing.

Mapp can determine the input parameter of binocular rendering based on other parameters of the display terminal (interpupillary distance (offset), field of view (FOV field of view), rendering image width and height (renderWidth/renderHeight), maximum/minimum value of the visual cone (depthFar/depthNear), lens focal length (Convergence) or anti-distortion coefficient (Anti-distortion), etc.). Furthermore, according to the input parameter, a left-view virtual image and a right-view virtual image can be generated for each frame of the cloud desktop image through image calculation.

Mapp can obtain the left-view real scene image and the right-view real scene image captured by the binocular camera on the display terminal, fuse the left-view real scene image with the left-view virtual image, to obtain the left-view fused image, and fuse the right-view real scene image with the right-view virtual image, to obtain the right-view fused image.

It should be noted that Mapp can establish a transmission channel with a specific application (hereinafter referred to as Vapp) running on the display terminal through a wired connection (type-c or lightning). After further encapsulation, the transmission channel can send the left-view fusion image and the right-view fusion image to the Vapp of the display terminal through their respective corresponding channels. After the display terminal Vapp recognizes the fused image, it is output to the left and right screens of the display terminal for display.

Through this implementation, the real scene image can be displayed synchronously with the cloud desktop image in the virtual scene, so that the user can still perceive the real scene in the real world after wearing wearable apparatus. The user does not need to take off wearable apparatus when he/she wants to use the real-world tool, thereby enhancing the user's sense of immersion in the virtual world.

FIG. 8 is a schematic diagram of an apparatus for displaying a cloud desktop provided by an exemplary embodiment of the present disclosure. As shown in FIG. 8, the display apparatus includes: an acquiring module 801, configured to: acquire a real scene image in a real environment where a wearable apparatus is located and a cloud desktop image provided by a cloud server; and a displaying module 802, configured to: in a virtual scene of the wearable apparatus, display the real scene image synchronously with the cloud desktop image.

Further optionally, when acquiring the real scene image in the real environment where the wearable apparatus is located and the cloud desktop image provided by the cloud server, the acquiring module 801 is specifically configured to: for any frame of cloud desktop image in a cloud desktop video stream, acquire a timestamp of the cloud desktop image; and select a frame of image having a timestamp same with the cloud desktop image from a real scene video stream captured of the real environment where the wearable apparatus is located, as the real scene image.

Further optionally, when the in a virtual scene of the wearable apparatus, displaying the real scene image synchronously with the cloud desktop image, the displaying module 802 is specifically configured to: fuse the cloud desktop image and the real scene image, to obtain a fused image; and display the fused image in the virtual scene of the wearable apparatus.

Further optionally, when fusing the cloud desktop image and the real scene image, to obtain a fused image, the displaying module 802 is specifically configured to: superimpose the real scene image on the cloud desktop image, to obtain the fused image.

Further optionally, when fusing the cloud desktop image and the real scene image, to obtain a fused image, the displaying module 802 specifically configured to: splice the real scene image and the cloud desktop image, to obtain the fused image.

Further optionally, the real scene image comprises: a left-view real scene image and a right-view real scene image captured by a binocular camera. When fusing the cloud desktop image and the real scene image, to obtain a fused image, the displaying module 802 is specifically configured to: perform binocular rendering on the cloud desktop image, to obtain a left-view virtual image and a right-view virtual image; fuse the left-view real scene image with the left-view virtual image, to obtain a left-view fused image; and fuse the right-view real scene image with the right-view virtual image, to obtain a right-view fused image.

Further optionally, the wearable apparatus further includes: a sight line detection component. The displaying module 802 is further configured to: determine a gaze area of the user in the virtual scene according to the sight line direction; if the gaze area is located in an area where the real scene image is located, highlight the real scene image.

In this embodiment, a real scene image in a real environment where a wearable apparatus is located and a cloud desktop image provided by a cloud server are acquired, and the real scene image is displayed synchronously with the cloud desktop image in a virtual scene of the wearable apparatus. In this way, the real scene image is displayed synchronously with the cloud desktop image in a virtual scene of the wearable apparatus, so that a user can still perceive a real scene of the real world after wearing the wearable apparatus, and the user does not need to take off the wearable apparatus when would like to use a tool in the real world, a sense of immersion of the user in the virtual world is improved accordingly.

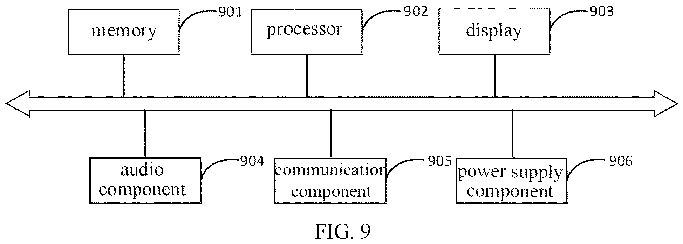

FIG. 9 is a schematic diagram of the structure of a terminal device provided by an exemplary embodiment of the present disclosure. As shown in FIG. 9, the terminal device includes: a memory 901 and a processor 902.

The memory 901 is used to store computer programs and can be configured to store various other data to support the operation on the terminal device. Example of such data includes instructions for any application or method operating on the terminal device, contact data, phone book data, messages, pictures, videos, etc.

The memory 901 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic storage, flash memory, magnetic disk or optical disk.

The processor 902 is coupled to the memory 901 and is used to execute the computer program in the memory 901, so as to: acquire a real scene image in a real environment where a wearable apparatus is located and a cloud desktop image provided by a cloud server; and in a virtual scene of the wearable apparatus, display the real scene image synchronously with the cloud desktop image.

Further optionally, when acquiring a real scene image in a real environment where a wearable apparatus is located and a cloud desktop image provided by a cloud server, the processor 902 is specifically used to: for any frame of cloud desktop image in a cloud desktop video stream, acquire a timestamp of the cloud desktop image; and select a frame of image having a timestamp same with the cloud desktop image from a real scene video stream captured of the real environment where the wearable apparatus is located, as the real scene image.

Further optionally, when in a virtual scene of the wearable apparatus, displaying the real scene image synchronously with the cloud desktop image, the processor 902 is specifically used to: fuse the cloud desktop image and the real scene image, to obtain a fused image; and display the fused image in the virtual scene of the wearable apparatus.

Further optionally, when fusing the cloud desktop image and the real scene image, to obtain a fused image, the processor 902 is specifically used to: superimpose the real scene image on the cloud desktop image, to obtain the fused image.

Further optionally, when fusing the cloud desktop image and the real scene image, to obtain a fused image, the processor 902 is specifically used to: splice the real scene image and the cloud desktop image, to obtain the fused image.

Further optionally, the real scene image includes: a left-view real scene image and a right-view real scene image captured by a binocular camera. When fusing the cloud desktop image and the real scene image, to obtain a fused image, the processor 902 is specifically used to: perform binocular rendering on the cloud desktop image, to obtain a left-view virtual image and a right-view virtual image; fuse the left-view real scene image with the left-view virtual image, to obtain a left-view fused image; and fuse the right-view real scene image with the right-view virtual image, to obtain a right-view fused image.

Further optionally, the wearable apparatus also includes: a sight line detection component. The processor 902 is also used to: perform a sight line detection of a user by the sight line detection component, to obtain a sight line direction; determine a gaze area of the user in the virtual scene according to the sight line direction; if the gaze area is located in an area where the real scene image is located, highlight the real scene image.

The memory in FIG. 9 above can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic storage, flash memory, magnetic disk or optical disk.

The display 903 in FIG. 9 includes a screen, and the screen may include a liquid crystal display (LCD) and a touch panel (TP). If the screen includes a touch panel, the screen may be implemented as a touch screen to receive an input signal from a user. The touch panel includes one or more touch sensors to sense a touch, a slide, and a gesture on the touch panel. The touch sensor may not only sense a boundary of a touch or sliding action, but also detect a duration and pressure associated with the touch or sliding operation.

The audio component 904 in FIG. 9 may be configured to output and/or input an audio signal. For example, the audio component includes a microphone (MIC), and when the device where the audio component is located is in an operation mode, such as a call mode, a recording mode, and a voice recognition mode, the microphone is configured to receive an external audio signal. The received audio signal may be further stored in a memory or transmitted via a communication component. In some embodiments, the audio component further includes a speaker for outputting an audio signal.

Furthermore, as shown in FIG. 9, the terminal device also includes: a communication component 905, a power supply component 906 and other components. FIG. 9 only schematically shows some components, which does not mean that the terminal device only includes the components shown in FIG. 9.

The communication component 905 in FIG. 9 is configured to facilitate wired or wireless communication between the device where the communication component is located and other devices. The device where the communication component is located can access a wireless network based on communication standards, such as WiFi, 2G, 3G, 4G or 5G, or a combination thereof. In an exemplary embodiment, the communication component receives a broadcast signal or broadcast-related information from an external broadcast management system via a broadcast channel. In an exemplary embodiment, the communication component may be implemented based on near field communication (NFC) technology, radio frequency identification (RFID) technology, infrared data association (IrDA) technology, ultra wideband (UWB) technology, Bluetooth (BT) technology and other technologies.

The power supply component 906 provides power to various components of the device where the power supply component is located. The power supply component may include a power management system, one or more power supplies, and other components associated with generating, managing, and distributing power to the device in which the power supply component is located.

In this embodiment, a real scene image in a real environment where a wearable apparatus is located and a cloud desktop image provided by a cloud server are acquired, and the real scene image is displayed synchronously with the cloud desktop image in a virtual scene of the wearable apparatus. In this way, the real scene image is displayed synchronously with the cloud desktop image in a virtual scene of the wearable apparatus, so that a user can still perceive a real scene of the real world after wearing the wearable apparatus, and the user does not need to take off the wearable apparatus when would like to use a tool in the real world, a sense of immersion of the user in the virtual world is improved accordingly.

Accordingly, an embodiment of the present disclosure also provides a computer-readable storage medium storing a computer program, which, when executed, can implement the steps that can be executed by the terminal device in the above method embodiment.

Those skilled in the art should know that the embodiment of the present disclosure may be provided as a method, a system or a computer program product. Therefore, the present disclosure may adopt a form of pure hardware embodiment, pure software embodiment and combined software and hardware embodiment. Moreover, the present disclosure may adopt a form of computer program product implemented on one or more computer-available storage media (including, but not limited to, a disk memory, a Compact Disc Read-Only Memory (CD-ROM) and an optical memory) including computer-available program codes.

The present disclosure is described with reference to flowcharts and/or block diagrams of the method, a device (system) and computer program product according to the embodiment of the present disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that an apparatus for realizing a function specified in one flow or more flows in the flowcharts and/or one block or more blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction apparatus may be generated by the instructions stored in the computer-readable memory, the instruction apparatus realizing the function specified in one flow or many flows in the flowcharts and/or one block or many blocks in the block diagrams.

These computer program instructions may further be loaded onto the computer or the other programmable data processing device, so that a series of operating steps are executed on the computer or the other programmable data processing device to generate processing implemented by the computer, and steps for realizing the function specified in one flow or many flows in the flowcharts and/or one block or many blocks in the block diagrams are provided by the instructions executed on the computer or the other programmable data processing device.

In a typical configuration, a computing device includes one or more processors (CPUs), an input/output interface, a network interface, and a memory.

The memory may include a non-permanent memory, a random access memory (RAM), and/or a non-volatile memory in a computer-readable medium, such as a read-only memory (ROM) or a flash RAM. The memory is an example of a computer-readable medium.

The computer-readable medium includes permanent and non-permanent, mobile and non-mobile media, which may implement information storage by any method or technology. The information may be a computer-readable instruction, a data structure, a program module, or other data. Examples of computer storage media include, but are not limited to, a phase change RAM (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disk (DVD) or other optical memories, a magnetic tape cartridge, a magnetic tape storage device or other magnetic storage devices or any other non-transmission media, which may be used to store information accessible by a computing device. As defined herein, the computer-readable medium does not include non-transitory computer-readable media such as modulated data signals and carrier waves.

It is also to be noted that terms "include", "contain" or any other variants thereof are intended to include nonexclusive inclusions, thereby ensuring that a commodity or system including a series of elements not only includes those elements but also includes other elements which are not clearly listed or further includes elements intrinsic to the commodity or the system. Under the condition of no more restrictions, an element defined by statement "including a/an" does not exclude existence of another element which is the same in a commodity or system including the element.

The above is only the embodiment of the present disclosure and not intended to limit the present disclosure. Those skilled in the art may make various modifications and variations to the present disclosure. Any modifications, equivalent replacements, improvements and the like made within the spirit and principle of the present disclosure shall fall within the scope of the claims of the present disclosure.

## Claims

1. A method for displaying a cloud desktop, comprising:

   acquiring a real scene image in a real environment where a wearable apparatus is located and a cloud desktop image provided by a cloud server; and
   in a virtual scene of the wearable apparatus, displaying the real scene image synchronously with the cloud desktop image.

2. The method according to claim 1, wherein the acquiring a real scene image in a real environment where a wearable apparatus is located and a cloud desktop image provided by a cloud server, comprises:

   for any frame of cloud desktop image in a cloud desktop video stream, acquiring a timestamp of the cloud desktop image; and
   selecting a frame of image having a timestamp same with the cloud desktop image from a real scene video stream captured of the real environment where the wearable apparatus is located, as the real scene image.

3. The method according to claim 1, wherein the in a virtual scene of the wearable apparatus, displaying the real scene image synchronously with the cloud desktop image, comprises:

   fusing the cloud desktop image and the real scene image, to obtain a fused image; and
   displaying the fused image in the virtual scene of the wearable apparatus.

4. The method according to claim 3, wherein the fusing the cloud desktop image and the real scene image, to obtain a fused image, comprises:
   superimposing the real scene image on the cloud desktop image, to obtain the fused image.

5. The method according to claim 3, wherein the fusing the cloud desktop image and the real scene image, to obtain a fused image, comprises:
   splicing the real scene image and the cloud desktop image, to obtain the fused image.

6. The method according to any one of claims 3 to 5, wherein the real scene image comprises: a left-view real scene image and a right-view real scene image captured by a binocular camera;
   and wherein the fusing the cloud desktop image and the real scene image, to obtain a fused image, comprises:

   performing binocular rendering on the cloud desktop image, to obtain a left-view virtual image and a right-view virtual image;
   fusing the left-view real scene image with the left-view virtual image, to obtain a left-view fused image; and fusing the right-view real scene image with the right-view virtual image, to obtain a right-view fused image.

7. The method according to any one of claims 1 to 5, wherein the wearable apparatus further comprises: a sight line detection component; and the method further comprises:

   performing a sight line detection of a user by the sight line detection component, to obtain a sight line direction;
   determining a gaze area of the user in the virtual scene according to the sight line direction;
   if the gaze area is located in an area where the real scene image is located, highlighting the real scene image.

8. An apparatus for displaying a cloud desktop, comprising:

   an acquiring module, configured to: acquire a real scene image in a real environment where a wearable apparatus is located and a cloud desktop image provided by a cloud server; and
   a displaying module, configured to: in a virtual scene of the wearable apparatus, display the real scene image synchronously with the cloud desktop image.

9. A terminal device, comprising: a memory and a processor;

   wherein, the memory is used to: store one or more computer instructions; and
   the processor is used to execute the one or more computer instructions to: perform the steps in the method according to any one of claims 1 to 7.

10. A computer-readable storage medium storing a computer program, when the computer program is executed by a processor, the processor is caused to implement the steps in the method according to any one of claims 1 to 7.

acquiring a real scene image in a real environment where a wearable apparatus is located and a cloud desktop image by a cloud server — 11

in a virtual scene of the wearable apparatus, displaying the real scene image synchronously with the cloud desktop image — 12

FIG. 1

cloud desktop image

real scene image

A

B

FIG. 2

cloud desktop image

real scene image

FIG. 3

FIG. 4

rx1 is the offset of the left x coordinate on the right screen of the camera
rx1 = R*tan(FOV_d/2) - R*tan(FOV_e/2) - d

rx2 is the offset of the right x coordinate
on the right screen of the camera
rx2 = R*tan(FOV_d/2) - R*tan(FOV_e/2) + d

This is the final area needs to be cut on the right screen

R is distance
FOV_e is FOV of eye
FOV_d is FOV of camera
FOV_d > FOV_e

e

d

w'

d = (w'-e) / 2

FIG. 5

FIG. 6

FIG. 7

FIG. 8

memory — 901 processor — 902 display — 903

audio component — 904 communication component — 905 power supply component — 906

FIG. 9

## INTERNATIONAL SEARCH REPORT

| International application No. |
| --- |
| **PCT/CN2022/111741** |

**A.    CLASSIFICATION OF SUBJECT MATTER**

G06F 3/01(2006.01)i;  G06T 19/00(2011.01)i

According to International Patent Classification (IPC) or to both national classification and IPC

**B.      FIELDS SEARCHED**

Minimum documentation searched (classification system followed by classification symbols)

G06F; G06T

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 虚拟现实, 增强现实, 云桌面, 同步, 叠加, 融合, 时间戳, 注视, VR, AR, cloud desktop, synchronization, overlay, fuse, timestamp, gaze

**C.      DOCUMENTS CONSIDERED TO BE RELEVANT**

| Category* | Citation of document, with indication, where appropriate, of the relevant passages | Relevant to claim No. |
| --- | --- | --- |
| PX | CN 114442814 A (DENGYING TECHNOLOGY CO., LTD.) 06 May 2022 (2022-05-06) claims 1-10 | 1-10 |
| X | CN 105955456 A (SHENZHEN SUPER PERFECT OPTOELECTRONICS CO., LTD.) 21 September 2016 (2016-09-21) description, paragraphs 0073-0084 and 0117-0133 | 1-10 |
| X | CN 110412765 A (GUANGDONG OPPO MOBILE COMMUNICATIONS CO., LTD.) 05 November 2019 (2019-11-05) description, paragraphs [0029]-[0048] | 1-10 |
| A | CN 106774869 A (GUANGZHOU DASCHOW TECHNOLOGY CO., LTD.) 31 May 2017 (2017-05-31) entire document | 1-10 |

☐ Further documents are listed in the continuation of Box C.        ☑ See patent family annex.

| | |
| --- | --- |
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **10 November 2022** | **28 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/111741**

| Patent document cited in search report | | | Publication date (day/month/year) | Patent family member(s) | | | Publication date (day/month/year) |
|---|---|---|---|---|---|---|---|
| CN | 114442814 | A | 06 May 2022 | None | | | |
| CN | 105955456 | A | 21 September 2016 | US | 2017301137 | A1 | 19 October 2017 |
| CN | 110412765 | A | 05 November 2019 | None | | | |
| CN | 106774869 | A | 31 May 2017 | None | | | |

Form PCT/ISA/210 (patent family annex) (January 2015)

**EP 4 502 763 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210329680